# EUROPEAN PATENT SPECIFICATION

(11) **EP 2 796 354 B1**
(45) Date of publication and mention of the grant of the patent: **19.04.2017**
(21) Application number: 12860956.7
(22) Date of filing: 19.12.2012
(51) Int. Cl.: B62J 99/00, B62J 27/00, B60L 3/00, B62J 1/12, B60L 11/18

(54) **SADDLE-TYPE ELECTRIC VEHICLE**
ELEKTRISCHES SATTELFAHRZEUG
VÉHICULE ÉLECTRIQUE DU TYPE À SELLE

(30) Priority: 22.12.2011 JP 2011280887; 22.11.2012 JP 2012256595
(43) Date of publication of application: 29.10.2014
(73) Proprietor: Yamaha Hatsudoki Kabushiki Kaisha, Iwata-shi, Shizuoka 438-8501 (JP)
(72) Inventor: SOUMA, Yousuke, Iwata-shi Shizuoka 438-8501 (JP); FUJISHIRO, Masaya, Iwata-shi Shizuoka 438-8501 (JP); OBA, Norio, Iwata-shi Shizuoka 438-8501 (JP)
(74) Representative: Grünecker Patent- und Rechtsanwälte PartG mbB
(86) International application number: PCT/JP2012/082959
(87) International publication number: WO 2013/094651

(56) References cited:
- JP-A- H0 731 050
- JP-A- H0 731 050
- JP-A- H06 141 407
- JP-A- H06 141 407
- JP-A- 2000 289 543
- JP-A- 2005 347 203
- JP-A- 2007 228 716
- JP-A- 2007 228 716
- JP-A- 2009 112 111
- JP-A- 2011 063 066
- JP-U- H01 105 301
- US-A- 5 478 249

## Description

The present invention relates to a straddle-type electric vehicle.

JP H06 141407 A discloses a straddle-type electric vehicle according to the preamble of claim 1.

JP 2007 228716 A discloses a charging system which has a safety device that is provided between a charge controller and a receptacle part and connects the charge controller with the receptacle part, when a detection switch detects that a terminal part is inserted into the receptacle part.

JP 2005 347203 A discloses an outdoor installation type electric power supply device that comprises a case with a plug detection means to detect whether a plug is connected to a receptacle or not, and a power supply control means supplying power to the receptacle when a opening/closing detection means detects the closing of a cover through the opening/closing detection means.

JP H07 31050 A discloses an electric shock preventive unit, which has a second limit switch that detects opening of a cover body. Based on the detection, a third connector coil opens the connection between a battery and the machine base side connector for charging. The power supply voltage from the battery is not applied to a machine base side connector.

An electric vehicle provided with an electric motor as a power supply source includes a charging receptacle for charging a battery. When charging the battery, a plug provided at an end portion of a cord extending from a charger is connected to the receptacle.

As a connector used in charging the electric vehicle, there is known a connector which includes a lock mechanism, a locking operation detector, and a lock controller (for example, see Patent Document 1). In this connector, the lock mechanism locks and unlocks a charger-side connector and a vehicle-side connector into and from a coupled state, and the locking operation detector detects an operating state of the lock mechanism. Then, the lock controller switches a control switch which opens or closes a charge line from a charging power supply to the battery between an open state and a closed state based on the result of the detection made by the locking operation detector.

In this connector, when the locking operation detector detects that the lock mechanism has been put in a locking state with the vehicle-side connector coupled to the charger-side connector, the control switch provided on the charge line is put in the closed state. Then, electric power is supplied from the charging power supply to the battery via the charge line, whereby an electrical communication is established between the connectors. Here, when a person who does not know that charging is being performed attempts to disconnect the connectors, although the connectors are electrically communicating with each other, the locking operation detector detects that the lock mechanism has been put in an unlocking state. Then, the control switch is put in the open state, whereby the electrical communication between the connectors is interrupted. This can prevent the generation of arc discharge that would occur between contacts of the connectors when the connectors are disconnected, whereby the protection of the contacts is ensured.

### Prior Art Document

[Patent Document 1] Japanese Patent Publication No. 10-262340A

### Summary of the invention

### Problem to be solved by the invention

In the configuration described above, however, with a view to preventing the arc discharge by switching the control switch provided on the charge line, an electrical communication interrupting mechanism including the lock mechanism, the locking operation detector and the lock controller is incorporated in a main body of the plug (the charge connector). This calls for the enlargement of the plug. Consequently, it cannot be avoided that the receptacle (the vehicle-side connector) to which the plug which is so enlarged is connected is also enlarged.

A parts installation space is limited on a straddle-type vehicle such as a two-wheeled electric vehicle, compared with a four-wheeled vehicle. This requires that the receptacle is also disposed within the narrow space. Consequently, it is difficult to install a large respectable which is large enough to permit the connection of a large plug like the one described above in a straddle-type electric vehicle.

Consequently, an object of the invention is to provide a straddle-type electric vehicle which enables the installation of a small receptacle and which can ensure the prevention of the generation of arc discharge when a plug is connected to or disconnected from the receptacle.

### How to solve the problem

In order to achieve the above object, according to one aspect of the present invention there is provided a straddle-type electric vehicle, comprising:
a charge receptacle to which a charge plug with a charge cord is removably connected;
an accommodation portion having an opening portion and provided with a charge receptacle;
a lid configured to open or close the opening portion of the accommodation portion;
a battery connected to the charge receptacle so as to be able to establish electrical communication therewith;
wherein the lid forms a part of an outer face of a vehicle body;
wherein the lid is configured to be able to close the opening portion under a condition that the charge plug is connected to the charge receptacle and the charge cord is led into the accommodation portion; wherein an electrical communication controller configured to control the electrical communication between the charge receptacle and the battery;
a signal line connected to the electrical communication controller; and
a signal changer configured to change a state of a signal carried by the signal line,
wherein the signal changer is configured to change the state of the signal based on a state of the lid opening or closing the opening portion, irrespective of whether the charge plug is connected to the charge receptacle or not; and
wherein the electrical communication controller is configured to interrupt or limit the electrical communication between the charge receptacle and the battery based on the state of the signal, in a case where the opening portion is unclosed by the lid even if the charge plug is connected to the charge receptacle:, and the signal line is a communication line connecting the electrical communication controller and a control unit of a charger configured to supply power to the battery.

In the above configuration, the lid, which is configured to open or close the opening portion of the accommodation portion provided with the charge receptacle, forms the outer face of the vehicle body. In addition, the lid is configured to be able to close the opening portion under a condition that the charge plug is connected to the charger receptacle. With this configuration, the lid is necessarily operated to open or close the opening portion when charging is performed. The state of the signal is then changed based on the state of the lid opening or closing the opening portion, irrespective of whether the charge plug is connected to the charge receptacle or not. In a case where the opening portion is unclosed by the lid even if the charge plug is connected to the charge receptacle, the electrical communication between the charge receptacle and the battery is interrupted or limited. Accordingly, it is possible to reliably prevent the generation of arc discharge without providing equipment for preventing the arc discharge on the charge plug or the charge receptacle. Consequently, it is possible to provide a downsized charge receptacle which is suitable for the straddle-type vehicle such as the two-wheeled electric vehicle wherein the parts installation space is limited compared with the four-wheeled vehicle. Moreover, it is possible to reliably prevent the generation of arc discharge when the plug is connected to or disconnected from such a charge receptacle.

Each of the signal changer and the charge receptacle is provided with a fixed portion configured to be fixed on the vehicle body. With this configuration, not only can the functions of the respective members be separated, but also the respective members can be disposed in positions which are suitable for their functions and positions where they are prevented from interfering with each other. Consequently, it is possible to provide a downsized charge receptacle which is suitable for the straddle-type vehicle such as the two-wheeled electric vehicle wherein the parts installation space is limited compared with the four-wheeled vehicle. Moreover, it is possible to reliably prevent the generation of arc discharge when the plug is connected to or disconnected from such a charge receptacle.

Each of the signal changer and the electrical communication controller is provided with a fixed portion configured to be fixed on the vehicle body. With this configuration, not only can the functions of the respective members be separated, but also the respective members can be disposed in positions which are suitable for their functions and positions where they are prevented from interfering with each other. Consequently, it is possible to provide a downsized charge receptacle which is suitable for the straddle-type vehicle such as the two-wheeled electric vehicle wherein the parts installation space is limited compared with the four-wheeled vehicle. Moreover, it is possible to reliably prevent the generation of arc discharge when the plug is connected to or disconnected from such a charge receptacle.

The signal changer may be a switch configured to interrupt the signal carried by the signal line when the opening portion is unclosed by the lid, or may be a switch configured to interrupt the signal carried by the signal line when the opening portion is closed by the lid. Alternatively, the signal changer is a position sensor configured to change the signal in accordance with a position of the lid opening or closing the opening portion.

In a case where the signal line is a communication line connecting the electrical communication controller and a control unit of a charger configured to supply power to the battery, it is not necessary to provide an individual signal line for controlling the interruption of charging. Consequently, the increase of the number of terminals in the charge receptacle can be avoided, whereby contributing to the cost reduction and the improvement of the connection reliability.

In a case where the lid is a part of a seat on which a rider can get seated, it is possible to dispose the charge receptacle in the accommodation space under the seat which is the existing equipment.

The charge receptacle may be configured such that: a dimension in a first direction, which is perpendicular to a connecting-disconnecting direction of the charger plug, is larger than a dimension in a second direction, which is perpendicular to the first direction and the connecting-disconnecting direction; and a plurality of terminals are arrayed in the first direction. In this case, a connection port of the charge receptacle can be formed into a thin-flat shape. Consequently, it is possible to enhance the degree of freedom in disposing the charge receptacle even in the straddle-type vehicle where the parts installation space is relatively limited. Moreover, it is possible to arrange power supply terminals, which likely generate heat, apart from each other.

### Brief Description of the Drawings

Fig. 1 is a left side view showing a two-wheeled electric vehicle according to an embodiment of the invention.
Fig. 2 is a left side view of the two-wheeled electric vehicle shown in Fig. 1 with some of constituent components removed therefrom.
Fig. 3 is a perspective view showing an accommodation space in a state that a seat of the two-wheeled electric vehicle shown in Fig. 1 is opened.
Fig. 4 is a perspective showing a state that a plug is connected to a receptacle provided in the accommodation space shown in Fig. 3.
Fig. 5 is a perspective view showing the appearance of the receptacle shown in Fig. 4.
Fig. 6 is a perspective view showing the appearance of the plug shown in Fig. 4.
Fig. 7 is a diagram showing a configuration of a charge system in the two-wheeled vehicle shown in Fig. 1.
Fig. 8 is a view schematically showing wirings between a charger and the two-wheeled vehicle shown in Fig. 1.
Fig. 9 is a right side view showing a relationship between an open/close state of the sheet of the two-wheeled vehicle shown in Fig. 1 and a sheet open/close switch.
Fig. 10 is a left side view showing a variation example of the two-wheeled vehicle shown in Fig. 1 wherein a location of the receptacle is different.

Referring to the accompanying drawings, the invention will be described in detail below. In the individual drawings for use in the following description, the scales are changed as required so that individual constituent members are illustrated in good sizes for recognition.

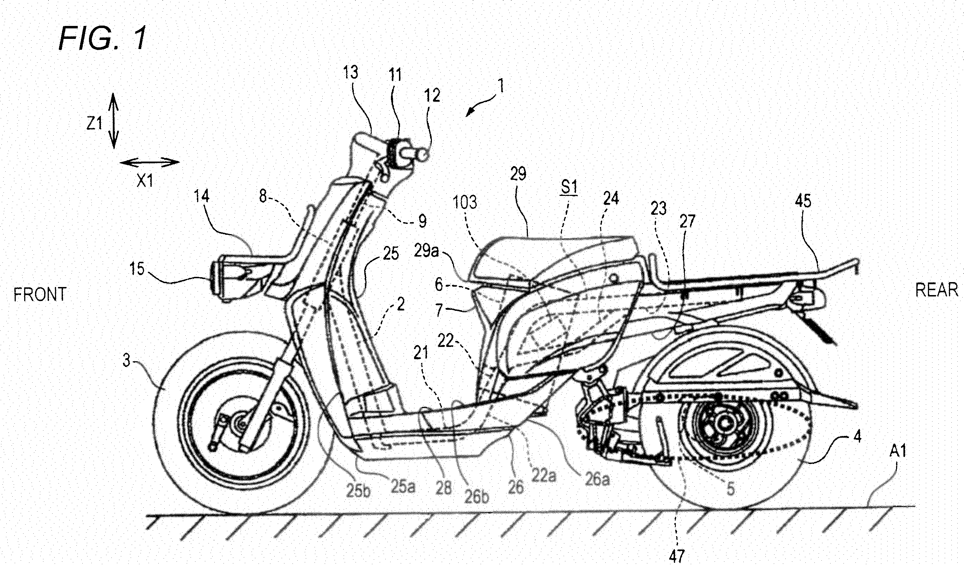

Fig. 1 is a left side view showing a two-wheeled electric vehicle according to an embodiment of the invention. In this embodiment, a two-wheeled electric vehicle 1 which takes the form of a scooter will be described as a straddle-type electric vehicle. The two-wheeled electric vehicle 1 can run with luggage placed at a front portion and a rear portion thereof and is suitable for application to a luggage carrying vehicle.

Directions denoted as front and rear, top and bottom, as well as left and right are based on a standard posture of the two-wheeled electric vehicle 1 which corresponds to a state in which the two-wheeled electric vehicle 1 runs straight ahead on a horizontal plane and the point of view of a rider when the rider faces the front of the vehicle. In addition, the configuration of the two-wheeled electric vehicle 1 will be described based on the two-wheeled electric vehicle 1 in such a state that the vehicle stands erect, a front wheel 3 and a rear wheel 4 are in contact with a road face A1, and the vehicle is in an unloaded state without a rider.

The two-wheeled electric vehicle 1 comprises a body frame 2, the front wheel 3, the rear wheel 4, an electric motor 5, a battery 6, and a body cover 7. In the two-wheeled electric vehicle 1, the electric motor 5 is driven by electric power supplied from the battery 6, and the rear wheel 4 is driven by the output of the electric motor 5. The electric motor 5 is accommodated in a power unit 47 which is disposed in the rightward of the rear wheel 4. Hereinafter, an overall construction of the two-wheeled electric vehicle 1 will be described sequentially from the front of a vehicle body.

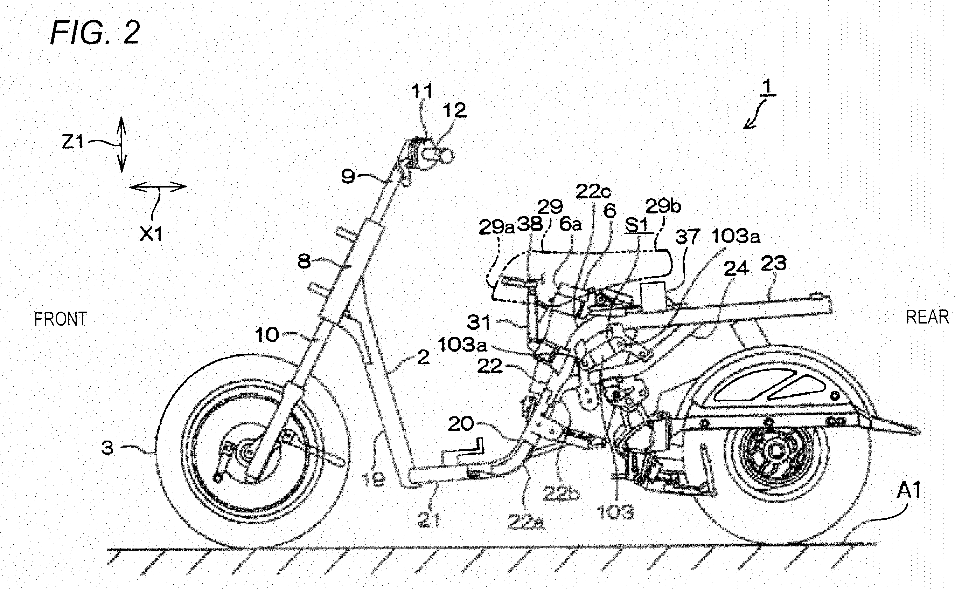

Fig. 2 is a left side view of the two-wheeled electric vehicle shown in Fig. 1 with some of constituent components removed therefrom. The two-wheeled electric vehicle 1 has a head pipe 8 which is disposed at a front upper portion of the two-wheeled electric vehicle 1. A steering shaft 9 is inserted rotatably in the head pipe 8. A front fork 10 having a pair of left and right fork legs is mounted at a lower end portion of the steering shaft 9. The front wheel 3 is attached to the front fork 10.

A handlebar 11 is mounted at an upper end portion of the steering shaft 9. The rider controls the handlebar 11 so as to turn the steering shaft 9, the front fork 10 and the front wheel 3 around an axis of the steering shaft 9.

Grips 12 are provided individually at both left and right end portions of the handlebar 11 (only a left grip is shown). A right grip constitutes a throttle grip. The rider turns the throttle grip so as to control the output of the electric motor 5.

As shown in Fig. 1, a meter 13 is provided in the vicinity of a center of the handlebar 11. A luggage rack 14 is disposed below the meter 13. The luggage rack 14 is fixed to the head pipe 8. The load of luggage placed on the luggage rack 14 acts mainly on the front wheel 3 via the head pipe 8 and the steering shaft 9. A headlamp 15 is fixed to a lower portion of the luggage rack 14.

As shown in Fig. 2, the two-wheeled electric vehicle 1 comprises a body frame 2 which extends rearwards from the head pipe 8. The body frame 2 is formed by using a steel pipe member or the like. The body frame 2 comprises a down tube 19 and a frame main body 20 which is disposed in rearward of the down tube 19. The down tube 19 extends obliquely downwards and rearwards from a lower portion of the head pipe 8. When seen from the side, the frame main body 20 extends rearwards from a lower end portion of the down tube 19, and a halfway portion of the frame main body 20 in relation to a front-to-rear direction X1 of the vehicle is formed into an S shape.

The frame main body 20 includes a pair of left and right frame main bodies. The frame main body 20 includes a first frame portion 21, a second frame portion 22, a third frame portion 23, and a fourth frame portion 24. The first frame portion 21 extends substantially straight and rearwards from the lower end portion of the down tube 19 and is slightly inclined obliquely upwards and rearwards.

The second frame portion 22 is formed into an S shape when seen from the side. The second frame portion 22 includes a lower end portion 22a, a middle portion 22b, and an upper end portion 22c. The lower end portion 22a of the second frame portion 22 is formed into a curved shape and is connected to a rear end portion of the first frame portion 21. The middle portion 22b of the second frame portion 22 extends obliquely upwards rearwards from the lower end portion 22a. When seen from the side, an inclination angle of the middle portion 22b in relation to the first frame portion 21 is, for example, 45 degrees or thereabout. The upper end portion 22c of the second frame portion 22 is formed into a curved shape and is connected to the middle portion 22b.

The third frame portion 23 extends rectilinearly from the upper end portion 22c and is slightly inclined obliquely upwards and rearwards. The fourth frame portion 24 extends rearwards from the middle portion 22b of the second frame portion 22, is curved obliquely upwards in a halfway position and is connected to a middle portion of the third frame portion 23.

As shown in Fig. 1, the two-wheeled electric vehicle 1 comprises the body cover 7 which is attached to the body frame 2. The body cover 7 comprises a front cover 25 which covers the head pipe 8, a lower cover 26 which extends downwards from a lower portion of the front cover 25, and a rear cover 27 which is disposed in rearward of the front cover 25.

The front cover 25 surrounds part of the steering shaft 9 and the head pipe 8 and also surrounds the down tube 19. The lower cover 26 extends rearwards from a lower portion 25a of the front cover 25 and covers the first frame portions 21 and the lower end portions 22a of the second frame portions 22 from the below, the left, and the right thereof. A foot rest portion 28 is disposed at an upper end portion of the lower cover 26. The foot rest portion 28 is provided so that the rider rests his or her feet thereon and is made substantially thin-flat.

The rear cover 27 is shaped, as a whole, so as to extend obliquely upwards and rearwards from a rear portion 26a of the lower cover 26. The rear cover 27 covers areas of the second frame portions 22 excluding the lower end portions 22a from the front, the left, and the right thereof. Additionally, the rear cover 27 covers the third frame portions 23 and the fourth frame portions 24 from the front, the left, and the right thereof.

A seat 29 is disposed above the rear cover 27. The feet of the rider sitting on the seat 29 rest on the foot rest portion 28 while the two-wheeled electric vehicle 1 is running. In the front-to-rear direction X1, the foot rest portion 28 is disposed between a rear face 25b of the front cover 25 and a front end portion 29a of the seat 29. Additionally, the seat 29 is disposed above the second frame portions 22, part of the third frame portions 23, and part of the fourth frame portions 24. A space surrounded by the seat 29 and the rear cover 27 defines an accommodation space S1.

As shown in Fig. 2, the seat 29, which serves as a lid of the invention, is supported by a first bracket 31 and a support bracket 37, constituting part of an external face of the vehicle body. The first bracket 31 is mounted at the middle portions 22b of the second frame portions 22. The first bracket 31 extends upwards from the middle portions 22b. A hinge portion 38 is provided at an upper end portion of the first bracket 31. The seat 29 is supported by the first bracket 31 via the hinge portion 38. The first bracket 31 supports the seat 29 from the below thereof. The seat 29 can pivot about the hinge portion 38. The accommodation space S1 can be opened upwards by causing the seat 29 to pivot about the hinge portion 38. It is noted that the hinge portion 38 may be omitted so that the seat 29 is fixed directly to the first bracket 31.

A rear portion 29b of the seat 29 is supported by the support bracket 37. The support bracket 37 is fixed to the third frame portions 23 of the body frame 2 and is shaped so as to project upwards from the third frame portions 23.

The battery 6, which is a power supply for the electric motor 5, is disposed below the seat 29. The battery 6 is disposed between the pair of left and right second frame portions 22. The battery 6 is a rechargeable secondary battery. When seen from the side, the battery 6 has a substantially rectangular shape in which a length (a height) in a vertical direction Z1 of the vehicle is longer than a length (a width) in the front-to-rear direction X1. The battery 6 is disposed in a posture in which the battery 6 is inclined obliquely rearwards with its front lying higher than its rear and is supported on the body frame 2. An upper portion 6a of the battery 6 is disposed between the first bracket 31 and the support bracket 37.

As shown in Fig. 1, a luggage rack 45 is disposed at the rear of the seat 29. The luggage rack 45 is disposed on the third frame portions 23 to be supported by the third frame portions 23. Luggage can be placed on the luggage rack 45. The load of the luggage placed on the luggage rack 45 is borne mainly by the rear wheel 4.

In this way, the luggage rack 14, the battery 6 which is heavy, and the luggage rack 45 are disposed so as to be aligned in the front-to-rear direction X1. Consequently, when luggage is placed on the luggage rack 14 and the luggage rack 45, the load of the two-wheeled electric vehicle 1 can be balanced evenly in the front-to-rear direction X1. Consequently, even with the luggage placed on the luggage rack 14 and the luggage rack 45, it is possible to maintain the high controllability of the two-wheeled electric vehicle 1.

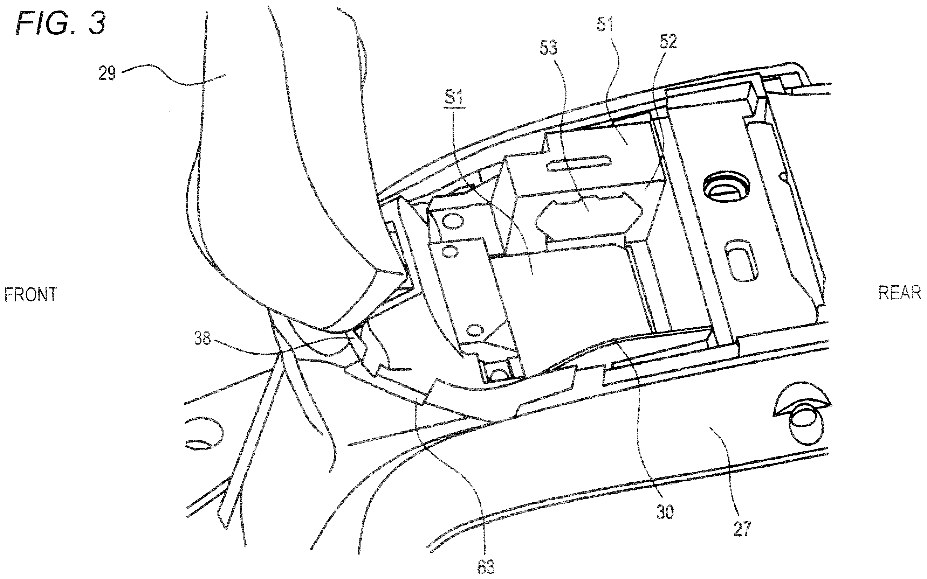

Fig. 3 is a perspective view showing an accommodation space S1 with a seat 29 opened. By causing the seat 29 to pivot upwards about a hinge portion 38, an opening portion 30 is revealed so that the accommodation space S1 is opened upwards. In addition, by causing the seat 29 to pivot about the hinge portion 38 in a reverse direction to the direction in which the seat 29 is opened to be closed, the opening portion 30 is closed. In this way, the seat 29 serves as a lid member which can close the accommodation space S1. Rainwater or dust is prevented from intruding into an interior of the accommodation space S1 as a result of the seat 29 closing the opening portion 30.

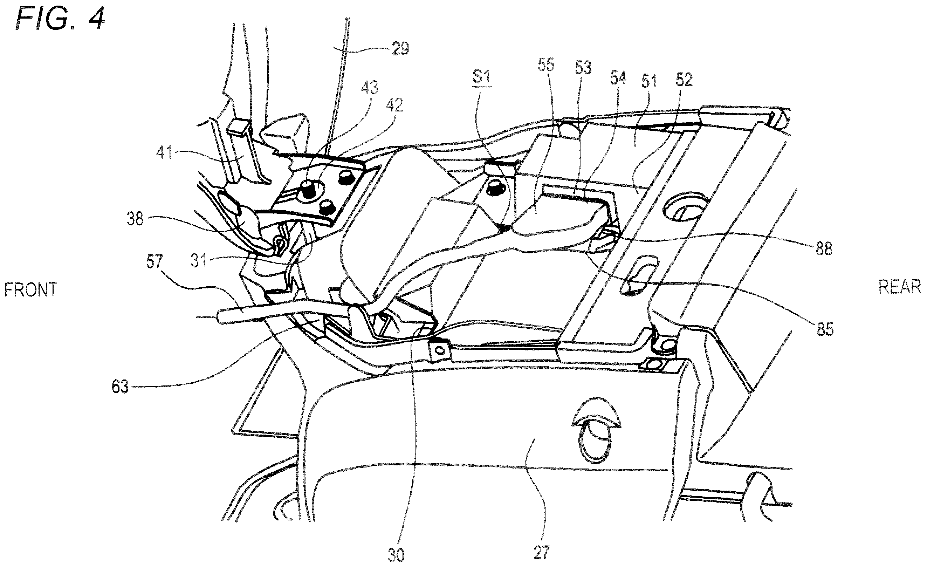

As shown in Fig. 4, a rib 41 is formed on a back face of the seat 29 near a connecting portion with the hinge portion 38 which supports the seat 29 pivotably relative to the first bracket 31. This rib 41 is disposed on an upper portion of the hinge portion 38 when the seat 29 is closed.

A seat open/close switch (a switch) 42 is provided at the hinge portion 38. This seat open/close switch 42 has a button portion 43. This button portion 43 is pushed out towards the seat 29 by means of a spring incorporated therein. In this seat open/close switch 42, when the seat 29 is closed, the button portion 43 is depressed by the rib 41 on the seat 29. The seat open/close switch 42 is brought to a turn-on state when the button portion 43 is depressed and brought to a turn-off state when the button portion 43 is released to project.

A connection box 51 is provided in an area closer to a right end of the accommodation space S1. A receptacle 53, which serves as a charge receptacle of the invention, is provided in a left side wall 52 of the connection box 51. The receptacle 53 is connected to a battery 6 so as to electrically communicate therewith. As shown in Fig. 4, a plug 55, which is a charge plug provided on a charge cord 57 which extends from a charger 58 (described later), is connected to the receptacle 53, whereby the battery 6 is charged.

The charge cord 57 is led out leftwards of the vehicle with the plug 55 connected to the receptacle 53. A cutout portion 63 is formed in a left front portion of an edge portion of the opening portion 30 of the accommodation space S1. The charge cord 57 is passed through the cutout portion 63 in the opening portion 30. With this configuration, the seat 29 can close the opening portion 30 in the accommodation space S1 with the charge cord 57 which connects the plug 55 with the charger 58 led into the interior of the accommodation space S1.

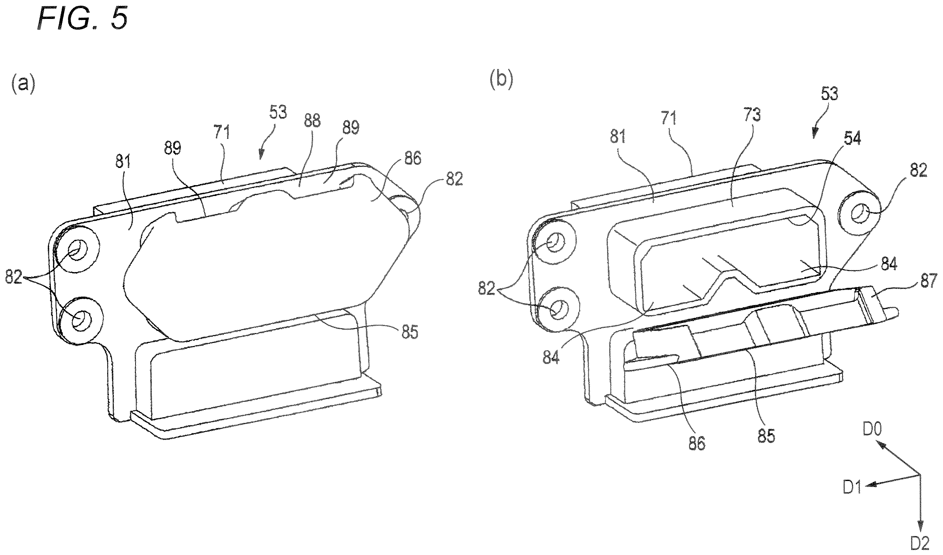

Fig. 5 shows an external appearance of the receptacle 53, wherein (a) shows a state in which a connection port 54 is closed, and (b) shows a state in which the connection port 54 is opened. The receptacle 53 includes a housing 71 which is formed from a synthetic resin or the like. A connection port 54 is formed in the housing 71, and a connecting portion 76 of the plug 55, which will be described later, can be connected to or disconnected from the connection port 54.

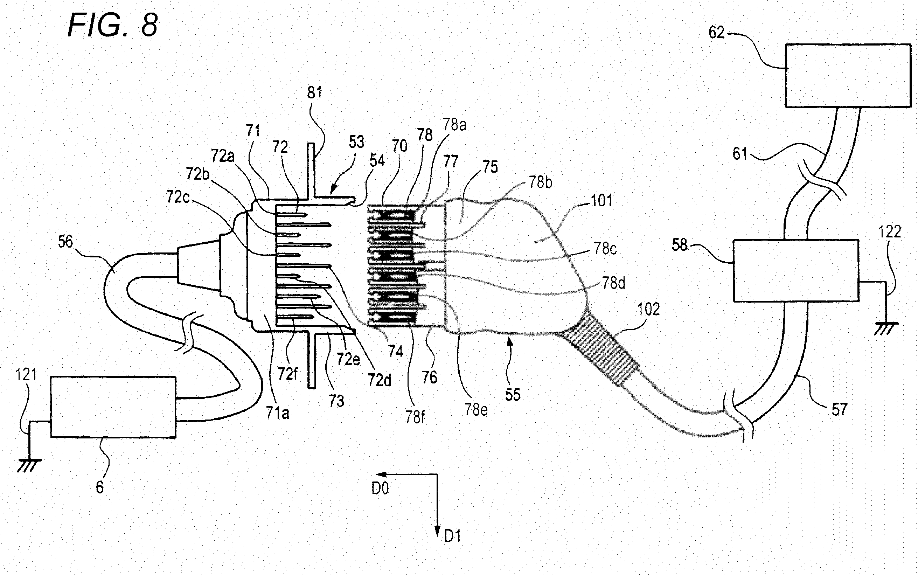

The connection port 54 is formed into a thin-flat shape as a whole. Specifically, the connection port 54 has an opening in which a dimension in a horizontal direction D1 which is perpendicular to an inserting direction D0 of the plug 55 is larger than a dimension in a vertical direction D2 which is perpendicular to the inserting direction and the horizontal direction. The housing 71 has a plurality of male terminals 72 in an interior of an outer circumferential wall 73 which defines the connection port 54 (see Fig. 8).

A flange portion 81, which projects to a circumference of the outer circumferential wall 73, is formed on the housing 71 of the receptacle 53. Mounting holes 82 are formed in both side portions of the flange portion 81. The housing 71 is fixed in place within the connection box 51 by screwing screw members (not shown) which are inserted through the mounting holes 82 into threaded holes (not shown) provided in a sheet metal member.

The housing 71 has a pair of guide grooves 84 in a lower portion of the outer circumferential wall 73 which defines the connection port 54. These guide grooves 84 are formed on a left- and right-hand sides of the housing 71 of the receptacle 53 in relation to a widthwise direction. These guide grooves 84 are formed along the inserting direction of the plug 55. Additionally, the receptacle 53 has a lid 85 which can close the connection port 54.

The lid 85 is formed from a synthetic resin or the like and has a thin-flat plate portion 86. The lid 85 has a circumferential wall 87 on a side of the thin-flat plate portion 86 which faces the connection port 54. The circumferential wall 87 extends along the outer circumferential wall 73 of the housing 71 of the receptacle 53 with the lid 85 closing the connection port 54 of the receptacle 53.

A lower end portion of the lid 85 is coupled to a pivot shaft so as to be pivotable about the pivot shaft. The pivot shaft is provided at a position below the connection port 54 in the housing 71 of the receptacle 53 so as to extend along a longitudinal direction of the connection port 54. Then, by causing the lid 85 to pivot about the pivot shaft, the connection port 54 of the receptacle 53 is opened or closed by the lid 85.

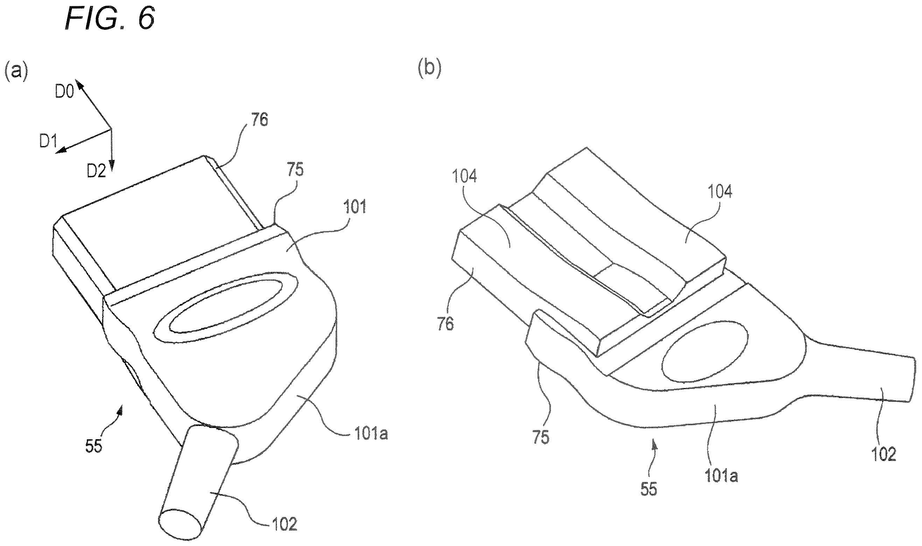

Fig. 6 shows an external appearance of the plug 55, wherein (a) shows an external appearance as seen from thereabove, and (b) shows an external appearance as seen from therebelow. The plug 55 includes a housing 75 which is formed from a synthetic resin or the like. The connecting portion 76 is provided on this housing 75 so as to be inserted into the connection port 54 of the receptacle 53. The connecting portion 76 has a plurality of terminal accommodation portions 70 (see Fig. 8).

Similarly to the connection port 54 of the receptacle 53, the connecting portion 76 of the plug 55 is also formed into a thin-flat portion. Namely, the connecting portion 76 is formed so that a dimension in a first direction D1 which is perpendicular to the inserting direction D0 of the plug 55 is larger than a dimension in a second direction D2 which is perpendicular to the plug inserting direction and the first direction.

The individual male terminals 72 are connected to corresponding female terminals 78 by inserting the connecting portion 76 of the plug 55 into the connection port 54 of the receptacle 53.

As shown at (a) in Fig. 6, the housing 75 of the plug 55 has a grip portion 101. The connecting portion 76 is provided at a front end portion of the grip portion 101. The grip portion 101 has a longer circumferential length that of the connecting portion 76.

A rear end face 101 a of the grip portion 101 is inclined rearwards so as to gradually move away from the connecting portion 76 as it extends from a right end thereof to a left end thereof, and the left end of the rear end face 101 a is disposed rearwards than the right end thereof. Consequently, the grip portion 101 has an asymmetrical shape relative to the left-to-right direction, which is a shape which facilitates the gripping of the plug 55 by the right hand of the operator.

When expressions of "front," "rear," "left," and "right" are used in the description made above, the expressions are used only as a matter of convenience in denoting the positional relationships in the housing 75, and hence, it is not required that the expressed directions coincide with front, rear, left and right directions of the vehicle. This will be true in a description which will be made below.

As shown at (b) in Fig. 6, a pair of elongated guide projections 104 are formed on a back face of the plug 55. The elongated guide projections 104 are formed over an overall length of the connecting portion 76 which includes part of the grip portion 101. The elongated guide projections 104 are formed on a left end and a right end of the plug 55 which correspond to a widthwise direction thereof. The elongated guide projections 104 are formed along the inserting direction in relation to the receptacle 53. The elongated guide projections 104 are slightly swollen at ends facing the grip portion 101.

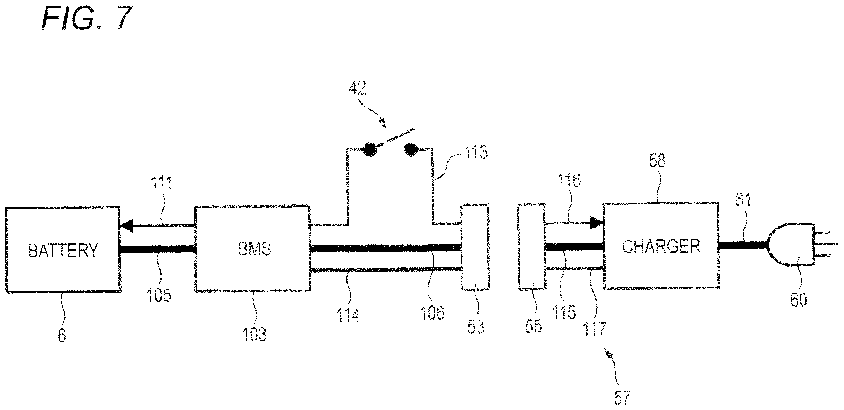

As shown in Fig. 7, the two-wheeled electric vehicle 1 includes a BMS (Battery Management System) 103.

The BMS 103 is connected with the battery 6 via an electric power supply line 105 and a communication line 111 and serves as an electrical communication controller which controls an electrical communication with the battery 6.

The BMS 103 and the receptacle 53 are connected together by a communication line 113. The seat open/close switch 42, which is operated by opening or closing the seat 29, is provided in a halfway position along the communication line 113.

The seat open/close switch 42 is brought to the turn-off state when the seat 29 opens the opening portion 30 of the accommodation space S1 and is brought to the turn-on state when the seat 29 closes the opening portion 30. When the seat open/close switch 42 is brought to the turn-off state, a signal carried by the communication line 113 is interrupted. This disables the communication between the receptacle 53 and the BMS 103. On the other hand, when the seat open/close switch 42 is brought to the turn-on state, the transmission and reception of a signal through the communication line 113 is enabled. This enables a communication between the receptacle 53 and the BMS 103.

Namely, the seat open/close switch 42 serves as a signal changer of the invention and changes the state of a signal carried by the communication line 113 based on whether the seat 29 is opened or closed.

The charge cord 57 connected to the plug 55 has an electric power supply line 115, a communication line 116 and a connection detection line 117. The charge cord 57 is connected to the charger 58. A power supply cable 61 is connected to the charger 58. A plug 60, which can be connected to a power supply 62 (described later), is provided at an end portion of the power supply cable 61.

When the plug 55 is connected to the receptacle 53, the electric power supply lines 106, 115 are electrically connected with each other, whereby a charge path from the charger 58 to the battery 6 is formed. In addition, the communication lines 113, 116 are electrically connected with each other, whereby a communication path between the charger 58 and the BMS 103 is formed. Further, a connection detection line 114 is electrically connected with the connection detection line 117, whereby a circuitry is formed which can detect a connection of the plug 55 to the receptacle 53. The BMS 103 detects that the plug 55 is connected to the receptacle 53 by monitoring the voltage of the connection detection line 114.

When a communication with the charger 58 is established, the BMS 103 establishes an electrical communication between the receptacle 53 and the battery 6. Namely, the BMS 103 continues to interrupt the electrical communication between the battery 6 and the receptacle 53 as long as a communication cannot be established between the charger 58 and itself.

Fig. 8 shows schematically a wiring between the two-wheeled electric vehicle 1 and the charger 58. The receptacle 53 is connected to the battery 6 via a wiring 56. Additionally, the plug 55 which is connected to the receptacle 53 is connected to the charge cord 57. The charge cord 57 is connected to the charger 58. The power supply 62 is connected to the charger 58 via an electric wire 61. With this configuration, with the plug 55 connected to the receptacle 53, electric power from the power supply 62 is supplied to the battery 6 via the charger 58, whereby the battery 6 is charged.

The plurality of male terminals 72 which are provided in the receptacle 53 are supported in the housing 71 so as to extend from a proximal portion 71 a of the housing 71 towards the connection port 54. These male terminals 72 are arrayed in a longitudinal direction (the first direction) of the thin-flat shape of the housing 71. Bulkhead portions 74 are formed in the housing 71 so as to insulate the male terminals 72 individually.

Specifically, the male terminals 72 include a positive terminal 72a, a first communication terminal 72b, a second communication terminal 72c, a connection detection terminal 72d, a ground terminal 72e, and a negative terminal 72f, which are disposed sequentially in that order from one end side of the housing 71 in the longitudinal direction thereof. Then, the first communication terminal 72b and the second communication terminal 72c, the connection detection terminal 72d, and the ground terminal 72e are disposed between the positive terminal 72a and the negative terminal 72f.

The positive terminal 72a and the negative terminal 72f are connected to a power supply line 106 of the battery 6 which is installed in the two-wheeled electric vehicle 1. The first communication terminal 72b and the second communication terminal 72c are connected to the communication line 113 which is used for signal transmission between the BMS 103 the charger 58. The BMS 103 is installed in the two-wheeled electric vehicle 1 as a control unit. The connection detection terminal 72d is connected to the connection detection line 114 which is used for detection of the insertion of the plug 55 into the connection port 54. The ground terminal 72e is connected to a ground line 121 of the two-wheeled electric vehicle 1.

The plurality of terminal accommodation portions 70 in the connecting portion 76 are arrayed in the longitudinal direction (that is, the first direction D1) of the thin-flat-shaped housing 75. Slits 77 are formed individually between the terminal accommodation portions 70 so that the bulkhead portions 74 which are formed in the housing 71 of the receptacle 53 can be inserted thereinto. The female terminals 78 are accommodated individually in the terminal accommodation portions 70. Namely, the plurality of female terminals 78 are arrayed in the longitudinal direction of the thin-flat shape in an interior of the connecting portion 76.

Specifically, the female terminals 78 include a positive terminal 78a, a first communication terminal 78b, a second communication terminal 78c, a connection detection terminal 78d, a ground terminal 78e, and a negative terminal 78f which are disposed sequentially in that order from one end side of the housing 75 in the longitudinal direction thereof. Then, the first communication terminal 78b, the second communication terminal 78c, the connection detection terminal 78d, and the ground terminal 78e are disposed between the positive terminal 78a and the negative terminal 78f.

The positive terminal 78a and the negative terminal 78f are connected to the power supply line 115 of the charger 58. The first communication terminal 78b and the second communication terminal 78c are connected to the communication line 116 which is used for signal transmission between the BMS 103 and the charger 58. The BMS 103 is the control unit installed in the two-wheeled electric vehicle 1. The connection detection terminal 78d is connected to the connection detection line 117 which is used for detection of the insertion of the plug 55 into the connection port 54. The ground terminal 78e is connected to a ground line 122 of the charger 58.

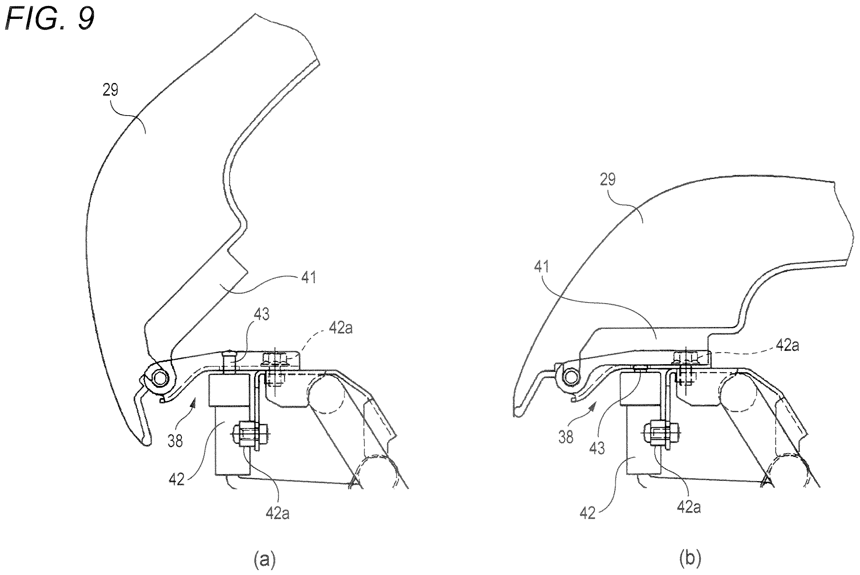

To charge the battery 6, first of all, as shown in Fig. 4, the seat 29 of the two-wheeled electric vehicle 1 is opened to reveal the accommodation space S1. Accordingly, as shown at (a) in Fig. 9, the button portion 43 of the seat open/close switch 42 which has been depressed by the rib 41 on the seat 29 projects outwards, whereby the seat open/close switch 42 is brought to the turn-off state. This disables the communication between the receptacle 53 and the BMS 103 via the communication line 113.

The operator who grips the plug 55 guides the plug 55 into the accommodation space S1, opens the lid 85 to reveal the connection port 54 of the receptacle 53 and inserts the connecting portion 76 of the plug 55 into the connection port 54. Then, the elongated guide projections 104 on the back face of the plug 55 are fitted in the guide grooves 84 of the housing 71 of the receptacle 53.

Accordingly, the electric power supply line 106 on the side of the BMS 103 and the electric power supply line 115 on the side of the charger 58 are connected together, and the communication line 113 on the side of the BMS 103 and the communication line 116 on the side of the charger 58 are connected together. In addition, the connection detection line 114 on the side of the BMS 103 and the connection detection line 117 on the side of the charger 58 are connected together, whereby the BMS 103 detects that the plug 55 is connected to the receptacle 53.

As this occurs, even though the communication line 113 on the side of the BMS 103 and the communication line 116 on the side of the charger 58 are connected to each other, since the seat open/close switch 42 is kept in the turn-off state, the communication between the BMS 103 and the charger 58 is kept disabled. Consequently, the state is maintained in which the electrical communication between the receptacle 53 and the battery 6 is kept interrupted by the BMS 103. As a result, the generation of arc discharge is reliably prevented which would otherwise occur between the male terminals 72 which are connected to the electric power supply line 106 of the receptacle 53 and the female terminals 78 which are connected to the electric power supply line 115 of the plug 55.

When the plug 55 is completely connected to the receptacle 53, the charge cord 57 is disposed in the cutout portion 63 formed in the opening portion 30 of the accommodation space S1 as shown in Fig. 4, and the seat 29 is closed to cover the opening portion 30 of the accommodation space S1. Accordingly, as shown at (b) in Fig. 9, the button portion 43 of the seat open/close switch 42 is depressed by the rib 41 on the seat 29 to bring the seat open/close switch 42 to the turn-on state.

As this occurs, a communication is enabled between the BMS 103 and the charger 58 via the communication lines 113, 116 which are connected to each other, whereby the BMS 103 enables the receptacle 53 to electrically communicate with the battery 6. When the operator activates the charger 58, charging the battery 6 is started.

A large current flows to the positive terminal 78a and the negative terminal 78f which are connected to the power supply line during charging, this increasing heat generated. In the plug 55 of this embodiment, the plurality of female terminals 78 are arrayed along the longitudinal direction of the thin-flat connecting portion 76. Further, the positive terminal 78a and the negative terminal 78f are spaced sufficiently apart from each other by the other female terminals 78 which are disposed therebetween. Consequently, heat generated at the positive terminal 78a and the negative terminal 78f can be dissipated well at both end portions of the housing 75. Therefore, the influence of heat generated during charging can be reduced as much as possible.

When the charging is completed, as shown in Fig. 4, the seat 29 is opened to reveal the accommodation space S1. Accordingly, as shown at (a) in Fig. 9, the button portion 43 of the seat open/close switch 42 which has been depressed by the rib 41 on the seat 29 projects outwards, whereby the seat open/close switch 42 is brought to the turn-off state. This disables the communication between the BMS 103 and the charger 58. Accordingly, the BMS 103 determines that the communication with the charger 58 is disabled, and interrupts the electrical communication between the receptor 53 and the battery 6.

Next, the plug 55 is disconnected from the receptacle 53, so that the electrically communicating state between the male terminals 72 of the receptacle 53 and the female terminals 78 of the plug 55 is released. Accordingly, the electric power supply line 106 on the side of the BMS 103 and the electric power supply line 115 on the side of the charger 58 are disconnected, and the communication line 113 on the side of the BMS 103 and the communication line 116 on the side of the charger 58 are disconnected. Additionally, when the plug 55 is disconnected from the receptacle 53, the BMS 103 detects, based on the voltage of the connection detection line 114, that the plug 55 has been disconnected from the receptacle 53.

As this occurs, since the electrical communication between the receptacle 53 and the battery 6 is interrupted, the generation of arc discharge is reliably prevented which would otherwise occur when the male terminals 72 connected to the electric power supply line 106 of the receptacle 53 are separated from the female terminals 78 connected to the electric power supply line 115 of the plug 55.

The connection port 54 of the receptacle 53 is closed by the lid 85. Thereafter, the plug 55 is removed from the accommodation space S1, and the seat 29 is closed to cover the opening portion 30 of the accommodation space S1. Since rainwater or dust is prevented from intruding into the accommodation space S1 as a result of the accommodation space S1 being closed by the seat 29, the receptacle 53 is protected twofold by the seat 29 and the lid 85.

Thus, as has been described heretofore, in this embodiment, whether the plug 55 is connected to or disconnected from the receptacle 53, the seat open/close switch 42 changes the signaling state of the communication line 113 based on whether the seat 29 is opened or closed to interrupt or connect the communication path between the receptacle 53 and the BMS 103. Then, in the event that the BMS 103 recognizes through the signaling state of the communication line 113 that the seat 29 does not close the opening portion 30 of the accommodation space S1, even with the plug 55 inserted in the receptacle 53, the BMS 103 interrupts the electrical communication between the receptacle 53 and the battery 6. Accordingly, the generation of arc discharge can be reliably prevented when the plug 55 is connected to or disconnected from the receptacle 53 with the seat 29 opened.

Additionally, in this embodiment, the switching operation which triggers the interrupting of an electric communication is executed by the seat open/close switch 42 which is disposed in a position which lies far away from the area where the plug 55 is connected to or disconnected from the receptacle 53. Because of this, the electrical communication interrupting operation and the connecting/disconnecting operation of the plug 55 can be separated, thereby making it possible to prevent the generation of arc discharge more reliably.

On the other hand, since the function to interrupt the electrical communication to prevent arc discharge does not have to be incorporated in the receptacle 53 or the plug 55, it is possible to realize a reduction in size of the receptacle 53 and the plug 55 while preventing the generation of arc discharge. With this configuration, also in the straddle-type vehicle such as a two-wheeled vehicle where the parts installation space is limited compared with a four-wheeled vehicle, it is possible to enhance the degree of freedom in disposing the receptacle 53.

Due to the receptacle 53 being reduced in size, it is possible to dispose the receptacle 53 in the accommodation space S1 under the seat 29 which is the existing equipment. Consequently, it is possible to obviate the necessity of providing an exclusive accommodation space for the receptacle 53 and providing an electrical communication interrupting switch on a lid which opens or closes the accommodation space, thereby making it possible to realize a reduction in size and cost of the vehicle itself.

In addition, since the small plug 55 can be used, it is possible to keep the seat 29, which is the lid for the accommodation space S1, closed easily during charging. Consequently, the waterproofness of the location where the receptacle 53 and the plug 55 are connected together can be realized, and an intentional disconnection of the plug 55 during charging can be prevented.

As shown in Fig. 9, the seat open/close switch 42 has a fixed portion where the seat open/close switch 42 is fixed to the hinge portion 38 with a screw member 42a. Additionally, as has been described with reference to Fig. 5, the receptacle 53 also has a fixed portion where the receptacle 53 is fixed to the side wall 52 of the connection box 51 with screw members and mounting holes 82. Consequently, not only can the functions of the seat open/close switch 42 and the receptacle 53 be separated, but also the seat open/close switch 42 and the receptacle 53 can be disposed in positions which are suitable for their functions and positions where they are prevented from interfering with each other. Consequently, it is possible to equip the small receptacle 53 which is suitable for the two-wheeled electric vehicle 1 whose parts installation space is limited compared with that of the four-wheeled vehicle. In addition to this, it is possible to reliably prevent the generation of arc discharge when the plug 55 is connected to or disconnected from the receptacle 53.

Additionally, as shown in Fig. 2, the BMS 103 has fixed portions where the BMS 103 is fixed to a side of a frame main body 20 with screw members 103a. Consequently, not only can the functions of the BMS 103 and the open/close switch 42 be separated, but also the BMS 103 and the open/close switch 42 can be positioned in the positions suitable for their functions and in the positions where they do not interfere with each other. Consequently, it is possible to equip the small receptacle 53 which is suitable for the two-wheeled electric vehicle 1 whose parts installation space is limited compared with that of the four-wheeled vehicle. In addition to this, it is possible to reliably prevent the generation of arc discharge when the plug 55 is connected to or disconnected from the receptacle 53.

The embodiment that has been described heretofore is intended to facilitate the understanding of the invention and is not intended to limit the invention. It is obvious that the invention can be modified or improved without departing from the intent and purpose thereof and that their equivalents can be also included in the invention.

The electrical communication control performed by the BMS 103 does not require that the electrical communication between the receptacle 53 and the battery 6 be interrupted completely. A configuration may be adopted in which the voltage or current at the receptacle 53 is reduced to such an extent that the generation of arc discharge is prevented which would occur in association with the connection or disconnection of the plug 55.

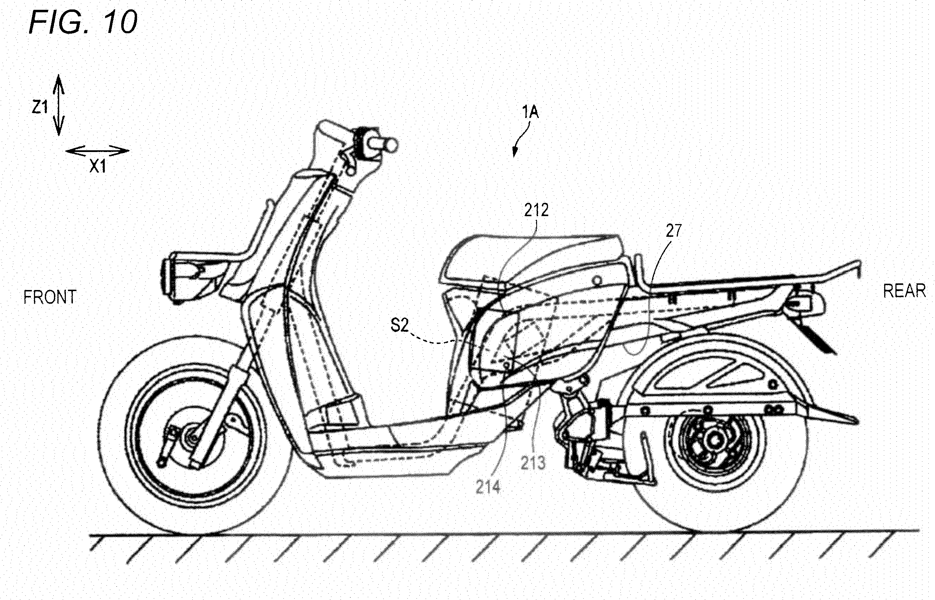

Where to dispose the receptacle 53 is not limited to the accommodation space S1 provided underneath the seat 29. For example, as in a two-wheeled electric vehicle 1A shown in Fig. 10, a configuration may be adopted in which a receptacle 53 is disposed in an accommodation space S2 which is provided on a left side of the vehicle in a rear cover 27. An opening portion 212 of this accommodation space S2 is opened sideward of the vehicle. A lid member 213 configured to open or close the opening portion 212 is provided on an outer wall of the accommodation space S2.

In this two-wheeled electric vehicle 1A, firstly, the lid member 213 is opened to reveal the opening portion 212 of the accommodation space S2. Thereafter, as has been described before, the plug 55 is inserted into the connection port 54 of the receptacle 53 , and the battery 6 is charged with a claw portion 88 of the lid 85 preventing the dislocation of the plug 55 and the opening portion 212 closed by the lid member 213.

A lid member open/close switch 214 which is operated when the lid member 213 is opened or closed is provided on the communication line 113 which connects the receptacle 53 with the BMS 103. Similarly to the embodiment described above, whether the plug 55 is connected to or disconnected from the receptacle 53, the lid open/close switch 214 changes the signaling state of the communication line 113 based on whether the lid member 213 is opened or closed to thereby interrupt or connect the communication path between the receptacle 53 and the BMS 103. Then, when recognizing through the signaling state of the communication line 113 that the lid member 213 does not close the opening portion 212 of the accommodation space S2, the BMS 103 interrupts the electrical communication between the receptacle 53 and the battery 6 even with the plug 55 inserted in the receptacle 53.

The function as the electrical communication control unit which controls the electrical communication between the receptacle 53 and the battery 6 does not necessarily have to be realized only by the BMS 103 alone. At least part of the function as the electrical communication control unit is allowed to be realized by at least either of a CCU (Cell Control Unit) and an MCU (Machine Control Unit) which are installed in the two-wheeled electric vehicle 1 so as to have a control function.

The position of the seat open/close switch 42 which is operated when opening or closing the seat 29 which is the lid member is not limited to that described in the embodiment. An appropriate position can be selected as the position where to dispose the seat open/close switch 42, as long as the position is spaced away from the area where the plug 55 is connected to or disconnected from the receptacle 53. This will be true with the lid open/close switch 214 of the two-wheeled electric vehicle 1A.

The combination of the on/off state of the seat open/close switch 42 and the interrupted state of the communication line 113 is arbitrary. Namely, a configuration may be adopted in which a signal carried by the communication line 113 is interrupted when the seat open/close switch 42 is brought to the turn-on state. This will be true with the lid open/close switch 214.

The combination of the open/closed state of the seat 29 and the interrupted state of the communication line 113 is also arbitrary. Namely, a configuration may be adopted in which a signal is allowed to be carried by the communication line 113 in such a state that the seat 29 opens the opening portion 30 of the accommodation space S1, and the BMS 103 interrupts the electrical communication between the receptacle 53 and the battery 6 based on the fact that the signal is carried by the signal line 113. This will be true with the lid open/close switch 214.

The communication line 113 does not necessarily have to be interrupted directly by the seat open/close switch 42. A configuration may be adopted in which the communication line 113 is interrupted by an appropriate circuitry element which is operated by a signal outputted from the seat open/close switch 42.

The function as the signal changer which changes the signaling state of the signal line 113 based on whether the seat 29 is opened or closed can also be realized by a position sensor which changes the signal according to whether the seat 29 is opened or closed. This will be true with the lid open/close switch 214.

The signal line whose signaling state is changed based on whether the seat 29 is opened or closed is not limited to the communication line 113. From the viewpoint of preventing arc discharge, any signal line other than the power supply line may suffice, and a configuration may be adopted in which the seat open/close switch 42 is provided in a halfway position along the length of the connection detection line 114.

The number of wheels of the straddle-type electric vehicle to which the invention is applied is not limited to two and hence can be determined as required.

## Claims

1. A straddle-type electric vehicle (1), comprising:
a charge receptacle (53) to which a charge plug (55) with a charge cord (57) is removably connected;
an accommodation portion (S1, S2) having an opening portion (30, 212) and provided with a charge receptacle (53);
a lid (29, 213) configured to open or close the opening portion (30, 212) of the accommodation portion (S1, S2);
a battery (6) connected to the charge receptacle (53) so as to be able to establish electrical communication therewith;
wherein the lid (29, 213) forms a part of an outer face of a vehicle body;
wherein the lid (29, 213) is configured to be able to close the opening portion (30, 212) under a condition that the charge plug (55) is connected to the charge receptacle (53) and the charge cord (57) is led into the accommodation portion (S1, S2);
**characterized in that**
an electrical communication controller (103) configured to control the electrical communication between the charge receptacle (53) and the battery (6);
a signal line (113) connected to the electrical communication controller (103); and
a signal changer (42) configured to change a state of a signal carried by the signal line (113),
wherein the signal changer (42) is configured to change the state of the signal based on a state of the lid (29, 213) opening or closing the opening portion (30, 212), irrespective of whether the charge plug (55) is connected to the charge receptacle (53) or not; and
wherein the electrical communication controller (103) is configured to interrupt or limit the electrical communication between the charge receptacle (53) and the battery (6) based on the state of the signal, in a case where the opening portion (30, 212) is unclosed by the lid (29, 213) even if the charge plug (55) is connected to the charge receptacle (53);
wherein the signal line (113) is a communication line connecting the electrical communication controller (103) and a control unit of a charger configured to supply power to the battery (6).

2. The straddle-type electric vehicle (1) as set forth in claim 1, wherein each of the signal changer (42) and the charge receptacle (53) is provided with a fixed portion configured to be fixed on the vehicle body.

3. The straddle-type electric vehicle (1) as set forth in claim 2, wherein each of the signal changer (42) and the electrical communication controller (103) is provided with a fixed portion configured to be fixed on the vehicle body.

4. The straddle-type electric vehicle (1) as set forth in any one of claims 1 to 3, wherein the signal changer (42) is a switch configured to interrupt the signal carried by the signal line (113) when the opening portion (30, 212) is unclosed by the lid (29, 213).

5. The straddle-type electric vehicle (1) as set forth in any one of claims 1 to 3, wherein the signal changer (42) is a switch configured to interrupt the signal carried by the signal line (113) when the opening portion (30, 212) is closed by the lid (29, 213).

6. The straddle-type electric vehicle (1) as set forth in any one of claims 1 to 3, wherein the signal changer (42) is a position sensor configured to change the signal in accordance with a position of the lid (29, 212) opening or closing the opening portion (30, 213).

7. The straddle-type electric vehicle (1) as set forth in any one of claims 1 to 6, wherein the lid (29, 213) is a part of a seat on which a rider can get seated.

8. The straddle-type electric vehicle (1) as set forth in any one of claims 1 to 7, wherein the charge receptacle (53) is configured such that:
a dimension in a first direction, which is perpendicular to a connecting-disconnecting direction of the charge plug (55), is larger than a dimension in a second direction, which is perpendicular to the first direction and the connecting-disconnecting direction; and
a plurality of terminals (72a, 72b, 72c, 72d, 72e, 72f) are arrayed in the first direction.

## Patentansprüche

1. Ein elektrisches Sattelfahrzeug (1), umfassend:
einen Ladebehälter (53) mit welchem ein Ladestecker (55) mit einem Ladekabel (57) entfernbar verbunden ist;
einen Aufnahmeabschnitt (S1, S2), der einen Öffnungsabschnitt (30, 212) hat und mit einem Ladebehälter (53) vorgesehen ist;
einen Deckel (29, 213) konfiguriert den Öffnungsabschnitt (30, 212) des Aufnahmeabschnitts (S1, S2) zu öffnen oder zu schließen;
eine Batterie (6), die mit dem Ladebehälter (53) verbunden ist, um damit die elektronische Kommunikation aufbauen zu können;
wobei der Deckel (29, 213) einen Teil von einer Außenfläche eine Fahrzeugkörpers bildet;
wobei der Deckel (29, 213) konfiguriert ist, fähig zu sein den Öffnungsabschnitt (30, 212) unter einer Bedingung zu schließen, dass der Ladestecker (55) mit dem Ladebehälter (53) verbunden ist und das Ladekabel (57) in den Aufnahmeabschnitt (S1, S2) geführt ist;
**dadurch gekennzeichnet, dass**
ein elektronischer Kommunikationskontroller (103) konfiguriert ist die elektronische Kommunikation zwischen dem Ladebehälter (53) und der Batterie (6) zu kontrollieren;
eine Signalleitung (113) mit dem elektronischen Kommunikationskontroller (103) verbunden ist; und ein Signalumwandler (42) konfiguriert ist einen Zustand von einem Signal, das durch eine Signalleitung (113) getragen wird, zu verändern,
wobei ein Signalumwandler (42) konfiguriert ist den Zustand des Signals basierend auf einen Zustand des Deckels (29, 213), der den Öffnungsabschnitt (30, 212) öffnet oder schließt, zu wechseln, unabhängig davon ob der Ladestecker (55) mit dem Ladebehälter (53) verbunden ist oder nicht; und
wobei der elektronische Kommunikationskontroller (103) konfiguriert ist die elektronische Kommunikation zwischen dem Ladebehälter (53) und der Batterie (6) zu unterbrechen oder zu limitieren, basierend auf dem Zustand des Signals, in einem Fall wo der Öffnungsabschnitt (30, 212) durch den Deckel (29, 213) geöffnet ist, auch wenn der Ladestecker (55) mit dem Ladebehälter (53) verbunden ist;
wobei die Signalleitung (113) eine Kommunikationsleitung ist, die den elektronischen Kommunikationskontroller (103) und eine Steuereinheit von einem Ladegerät, der konfiguriert ist Strom zur Batterie (6) zuzuführen, verbindet.

2. Das elektrische Stattelfahrzeug (1) wie im Anspruch 1 aufgeführt, wobei jede der Signalumwandler (42) und der Ladebehälter (53) mit einem fixierten Abschnitt vorgesehen ist, der konfiguriert ist am Fahrzeugkörper fixiert zu sein.

3. Das elektrische Stattelfahrzeug (1) wie im Anspruch 2 aufgeführt, wobei jede der Signalumwandler (42) und der Kommunikationskontroller (103) mit einem fixierten Abschnitt vorgesehen ist, der konfiguriert ist am Fahrzeugkörper fixiert zu sein.

4. Das elektrische Stattelfahrzeug (1) wie einem der Ansprüche 1 bis 3 aufgeführt, wobei der Signalumwandler (42) ein Schalter ist, der konfiguriert ist das Signal, das durch die Signalleitung (113) getragen wird zu unterbrechen, wenn der Öffnungsabschnitt (30, 212) durch den Deckel (29, 213) geöffnet ist.

5. Das elektrische Stattelfahrzeug (1) wie einem der Ansprüche 1 bis 3 aufgeführt, wobei der Signalumwandler (42) ein Schalter ist, der konfiguriert ist das Signal, das durch die Signalleitung (113) getragen wird zu unterbrechen, wenn der Öffnungsabschnitt (30, 212) durch den Deckel (29, 213) geschlossen ist.

6. Das elektrische Stattelfahrzeug (1) wie einem der Ansprüche 1 bis 3 aufgeführt, wobei der Signalumwandler (42) ein Positionssensor ist, der konfiguriert ist das Signal gemäß einer Position des Deckels (29, 212), der den Öffnungsabschnitt (30, 213) öffnet oder schließt zu wechseln.

7. Das elektrische Stattelfahrzeug (1) wie einem der Ansprüche 1 bis 6 aufgeführt, wobei der Deckel (29, 213) ein Teil von einem Sitz ist, auf welchem der Fahrer gesetzt werden kann.

8. Das elektrische Stattelfahrzeug (1) wie einem der Ansprüche 1 bis 7 aufgeführt, wobei der Ladebehälter (53) derart konfiguriert ist, dass:
eine Abmessung in eine erste Richtung, welche perpendikular zu einer Verbindungs-Trennungsrichtung eines Ladesteckers (55) ist, größer als eine Abmessung in eine zweite Richtung, welche perpendikular zu der ersten Richtung und der Verbindungs-Trennungsrichtung ist; und
eine Vielzahl von Anschlusselementen (72a, 72b, 72c, 72d, 72e, 72f) in die erste Richtung angeordnet sind.

## Revendications

1. Véhicule électrique de type à selle (1) comprenant :
une embase de charge (53) à laquelle est connectée de manière amovible une fiche de charge (55) comportant un cordon de charge (57),
une partie de réception (S1, S2) comportant une ouverture (30, 212) et dotée d'une embase de charge (53),
un couvercle (29, 213) configuré pour ouvrir ou fermer l'ouverture (30, 212) de la partie de réception (S1, S2),
une batterie (6) reliée à l'embase de charge (53) de façon à pouvoir établir une communication électrique avec celle-ci,
dans lequel le couvercle (29, 213) forme une partie formant face externe du carénage du véhicule,
dans lequel le couvercle (29, 213) est configuré pour pouvoir fermer l'ouverture (30, 212) à la condition que la fiche de charge (55) soit connectée à l'embase de charge (53), et le cordon de charge (57) est conduit dans la partie de réception (S1, S2),
**caractérisé en ce que**
un contrôleur de communication électrique (103), est configuré pour commander la communication électrique entre l'embase de charge (53) et la batterie (6),
une ligne de signal (113) est reliée au contrôleur de communication électrique (103), et
un changeur de signal (42) est configuré pour changer l'état d'un signal transporté par la ligne de signal (113),
dans lequel le changeur de signal (42) est configuré pour changer l'état du signal sur la base de l'état du couvercle (29, 213) ouvrant ou refermant l'ouverture (30, 212), indépendamment de ce que la fiche de charge (55) est connectée ou non à l'embase de charge (53), et
dans lequel le contrôleur de communication électrique (103) est configuré pour interrompre ou limiter la communication électrique entre l'embase de charge (53) et la batterie (6) sur la base de l'état du signal dans le cas où l'ouverture (30, 212) n'est plus obturée par le couvercle (29, 213) même si la fiche de charge (55) est connectée à l'embase de charge (53),
dans lequel la ligne de signal (113) est une ligne de communication reliant le contrôleur de communication électrique (103) et l'unité de commande d'un chargeur configuré pour fournir de l'énergie à la batterie (6).

2. Véhicule électrique de type à selle (1) selon la revendication 1, dans lequel chacun du changeur de signal (42) et de l'embase de charge (53) est doté d'une partie fixe configurée pour être fixée sur le carénage du véhicule.

3. Véhicule électrique de type à selle (1) selon la revendication 2, dans lequel chacun du changeur de signal (42) et du contrôleur de communication électrique (103) est doté d'une partie fixe configurée pour être fixée sur le carénage du véhicule.

4. Véhicule électrique de type à selle (1) selon l'une quelconque des revendications 1 à 3, dans lequel le changeur de signal (42) est un interrupteur configuré pour interrompre le signal transporté par la ligne de signal (113) lorsque l'ouverture (30, 212) n'est plus obturée par le couvercle (29, 213).

5. Véhicule électrique de type à selle (1) selon l'une quelconque des revendications 1 à 3, dans lequel le changeur de signal (42) est un interrupteur configuré pour interrompre le signal transporté par la ligne de signal (113) lorsque l'ouverture (30, 212) est obturée par le couvercle (29, 213).

6. Véhicule électrique de type à selle (1) selon l'une quelconque des revendications 1 à 3, dans lequel le changeur de signal (42) est un capteur de position configuré pour changer le signal en fonction de la position du couvercle (29, 213) ouvrant ou refermant l'ouverture (30, 212).

7. Véhicule électrique de type à selle (1) selon l'une quelconque des revendications 1 à 6, dans lequel le couvercle (29, 213) fait partie d'un siège sur lequel peut s'asseoir un conducteur.

8. Véhicule électrique de type à selle (1) selon l'une quelconque des revendications 1 à 7, dans lequel l'embase de charge (53) est configurée de sorte que :
la dimension dans une première direction qui est perpendiculaire à la direction de connexion - déconnexion de la fiche de charge (55), est plus grande que la dimension dans une seconde direction qui est perpendiculaire à la première direction et à la direction de connexion - déconnexion, et
différentes bornes (72a, 72b, 72c, 72d, 72e, 72f) sont disposées en réseau dans la première direction.
